# EUROPEAN PATENT APPLICATION

(11) **EP 4 187 309 A1**
(43) Date of publication of application: **31.05.2023**
(21) Application number: 21900793.7
(22) Date of filing: 08.10.2021
(51) Int. Cl.: G02B 27/01, G02B 27/00, G02B 3/00, G02B 7/02

(54) **WEARABLE ELECTRONIC DEVICE COMPRISING LIGHT-EMITTING UNIT**

(30) Priority: 03.12.2020 KR 20200167243
(71) Applicant: Samsung Electronics Co., Ltd., Suwon-si, Gyeonggi-do 16677 (KR)
(72) Inventor: JEON, Jina, Suwon-si Gyeonggi-do 16677 (KR); SONG, Doukyoung, Suwon-si Gyeonggi-do 16677 (KR); SONG, Hyoungil, Suwon-si Gyeonggi-do 16677 (KR); LEE, Jungkeun, Suwon-si Gyeonggi-do 16677 (KR)
(74) Representative: Nederlandsch Octrooibureau
(86) International application number: PCT/KR2021/013880
(87) International publication number: WO 2022/119105

(57) **Abstract**

A wearable electronic device may comprise: a housing; a light output module arranged inside the housing and configured to output an image; an optical element, which is arranged inside the housing, comprises a waveguide for guiding light generated by the light output module and includes a first surface and a second surface that is opposite to the first surface; at least one display member comprising a first window member arranged on the first surface and a second window member, which is arranged on the second surface and includes a first recess facing the second surface; and at least one light-emitting unit arranged in the first recess. Other various embodiments are possible.

## Description

### [Technical Field]

The present disclosure relates to a wearable electronic device including a light emitting unit.

### [Background Art]

With the development of electronics and communication technologies, electronic devices may come in a more compact and lightweight form factor to be worn on the user's body without discomfort. For example, commercially available wearable electronic devices include head mounted devices (HMDs), smart watches (or bands), contact lens-type devices, ring-type devices, glove-type devices, shoe-type devices, or clothing-type devices. Since the wearable electronic device is directly worn on the user's body, more portability and user accessibility may be obtained.

The HMD is a device used while being worn on the user's head or face and may provide augmented reality (AR) to the user. For example, a glasses-type HMD providing AR may provide information regarding objects in the form of images or texts to the user in at least a partial space of the user's field of view. The HMD may provide virtual reality (VR) to the user. For example, the HMD may output independent images to the users' eyes and output the content, provided from an external input to the user, in the form of an image or audio, thereby providing a superb sense of immersion.

### [Disclosure]

### [Technical Problem]

Thus, it may be advantageous for wearable electronic devices to be reduced in size and weight to increase user portability and convenience and, for high performance, to include components integrated in a small space.

A wearable electronic device may include a light emitting unit for emitting visible light or infrared light to track the trajectory of the user's gaze. When the light emitting unit is mounted in the rim of the housing, the housing may increase in thickness and may be more difficult to assemble. When the light emitting unit is mounted in the display, the light emitting unit and lines may be visually exposed, obstructing the user's view and deteriorating an aesthetic sense.

### [Technical Solution]

A wearable electronic device may include a light emitting unit disposed between a waveguide of a display member and a window member.

According to an aspect of the disclosure, a wearable electronic device may include a housing, a light output module disposed in the housing and configured to output an image, at least one display member disposed in the housing, the at least one display member including an optical element including a waveguide configured to guide light generated from the light output module and including a first surface and a second surface opposite to the first surface, a first window member disposed on the first surface, and a second window member disposed on the second surface and including a first recess facing the second surface, and at least one light emitting unit disposed in the first recess.

According to an aspect of the disclosure, a wearable electronic device may include a lens frame, a wearing member coupled to at least a side of the lens frame, a light output module configured to output an image, at least one display member disposed in the lens frame and including an optical element including a display area configured to display light generated from the light output module and a dummy area surrounding the display area and facing the lens frame, a first window member disposed on a first surface of the optical element, and a second window member disposed on a second surface of the optical element, opposite to the first surface, and at least one light emitting unit disposed between the dummy area and the second window member, between the dummy area and the first window member, or in the dummy area.

### [Advantageous Effects]

The electronic device may emit light for gaze tracking using the light emitting unit positioned between the optical element (or an optical member) of the display member and the window member. Compared with an electronic device having a light emitting unit in a housing, an electronic device having a light emitting unit in a display member may have a reduced distance between the light emitting unit and the user's eyes, and thus an increased gaze tracking recognition rate and a reduced output requirement for the light emitting unit.

The electronic device may include the light emitting unit disposed on the transparent electrode film, thus allowing for reduced visibility of the light emitting unit and an increased aesthetic look of the wearable electronic device.

### [Description of the Drawings]

The above and other aspects, features, and advantages of certain embodiments of the present disclosure will be more apparent from the following description taken in conjunction with the accompanying drawings, in which:
FIG. 1 is a block diagram illustrating an electronic device in a network environment, according to an embodiment;
FIG. 2 is a perspective view illustrating a wearable electronic device, according to an embodiment;
FIG. 3 is a perspective view illustrating an internal configuration of a wearable electronic device, according to an embodiment;
FIG. 4 is an exploded perspective view illustrating a wearable electronic device, according to an embodiment;
FIG. 5 is a front view illustrating an electronic device including a light emitting unit disposed on a display member, according to an embodiment;
FIG. 6 is a side view illustrating a display member, according to an embodiment;
FIG. 7 is an enlarged view of area A of FIG. 6, according to an embodiment;
FIG. 8 is an enlarged view of area A of FIG. 6, according to an embodiment;
FIG. 9 is an enlarged view of area B of FIG. 6, according to an embodiment;
FIG. 10 is an enlarged view of area B of FIG. 6, according to an embodiment;
FIG. 11 is an enlarged view of area C of FIG. 6, according to an embodiment; and
FIG. 12 is a perspective view illustrating a wearable electronic device, according to an embodiment.

### [Mode for Invention]

Various embodiments of the present disclosure are described with reference to the accompanying drawings. However, various embodiments of the present disclosure are not limited to particular embodiments, and it should be understood that modifications, equivalents, and/or alternatives of the embodiments described herein can be variously made. With regard to description of drawings, similar components may be marked by similar reference numerals.

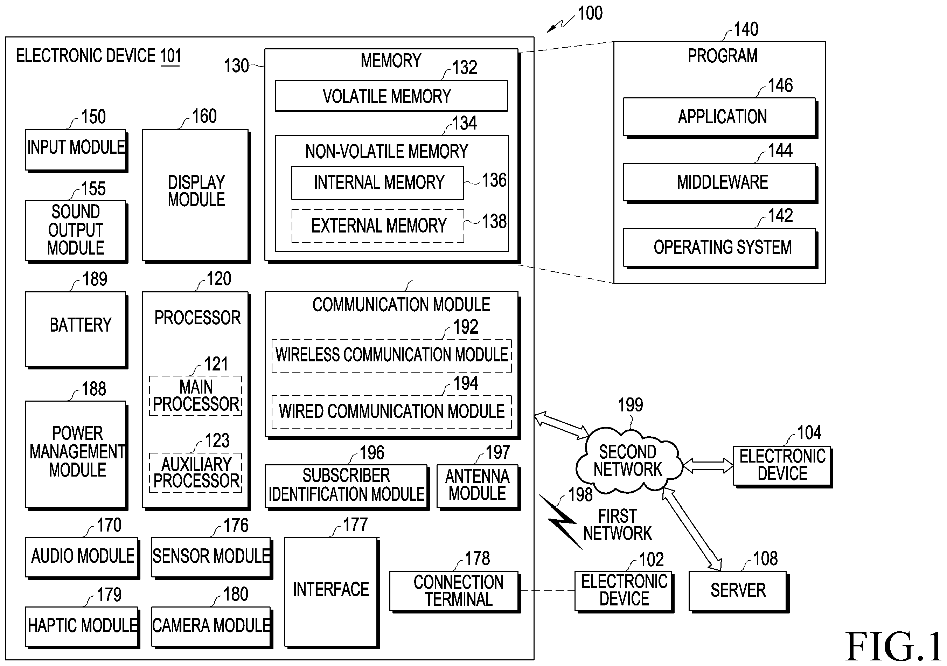

FIG. 1 is a block diagram illustrating an electronic device in a network environment, according to an embodiment;

Referring to FIG. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an ISP or a CP) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing.

The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, ISPs, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the AP) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via a first network 198 (e.g., a short-range communication network, such as Bluetooth^{™}, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (LTL), or a round trip of 1ms or less) for implementing URLLC.

The antenna module 197 may transmit or receive a signal or power to or from the outside (e.g., the external electronic device). According to an embodiment, the antenna module may include an antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra-low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or health-care) based on 5G communication technology or IoT-related technology.

The electronic device according to various embodiments may be one of various types of electronic devices. The electronic devices may include, for example, a portable communication device (e.g., a smart phone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

According to various embodiments, each component (e.g., a module or a program) of the above-described components may include a single entity or multiple entities. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

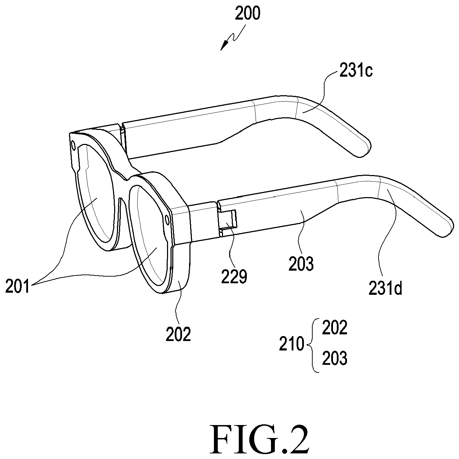

FIG. 2 is a perspective view illustrating a wearable electronic device, according to an embodiment.

Referring to FIG. 2, the wearable electronic device 200 may be a glasses-type electronic device, and the user may visually recognize her surrounding objects or environment while wearing the wearable electronic device 200. For example, the wearable electronic device 200 may be an HMD or smart glasses capable of providing images directly in front of the user's eyes. The configuration of the wearable electronic device 200 of FIG. 2 may be identical in whole or part to the configuration of the electronic device 101 of FIG. 1.

The wearable electronic device 200 may include a housing that forms the exterior of the wearable electronic device 200. The housing 210 may provide a space in which components of the wearable electronic device 200 may be disposed. For example, the housing 210 may include a lens frame 202 and at least one wearing member 203.

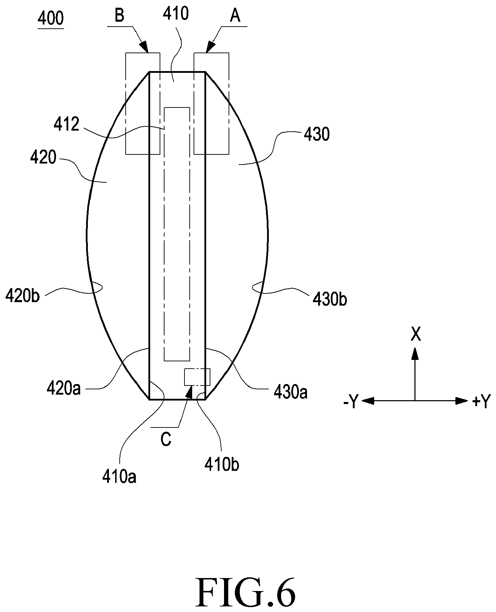

The wearable electronic device 200 may include a display member 201 capable of providing the user with visual information. The display member 201 may include a lens (e.g., the first window member 420 or the second window member 430 of FIG. 6), a display, a waveguide 412, and/or a touch circuit-equipped module. The display member 201 may be transparent or translucent. The display member 201 may include a semi-transparent glass or a window member the light transmittance of which may be adjusted as the coloring concentration is adjusted. A pair of display members 201 may be provided and disposed to correspond to the user's left and right eyes, respectively, with the wearable electronic device 200 worn on the user's body.

The lens frame 202 may accommodate at least a portion of the display member 201. For example, the lens frame 202 may surround at least a portion of the display member 201. The lens frame 202 may position at least one of the display members 201 to correspond to the user's eye. The lens frame 202 may be the rim of a normal eyeglass structure. The lens frame 202 may include at least one closed loop surrounding the display devices 201.

The wearing members 203 may extend from the lens frame 202. For example, the wearing members 203 may extend from ends of the lens frame 202 and, together with the lens frame 202, may be supported and/or positioned on a part (e.g., ears) of the user's body. The wearing members 203 may be rotatably coupled to the lens frame 202 through hinge structures 229. The wearing member 203 may include an inner side surface 231c configured to face the user's body and an outer side surface 231d opposite to the inner side surface.

The wearable electronic device 200 may include the hinge structures 229 configured to fold the wearing members 203 on the lens frame 202. The hinge structure 229 may be disposed between the lens frame 202 and the wearing member 203. While the wearable electronic device 200 is not worn, the user may fold the wearing members 203 on the lens frame 202 to carry or store the wearable electronic device 200.

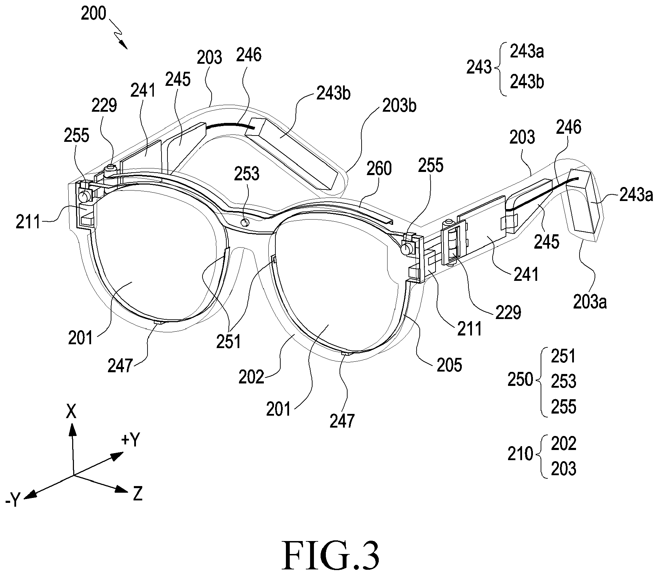

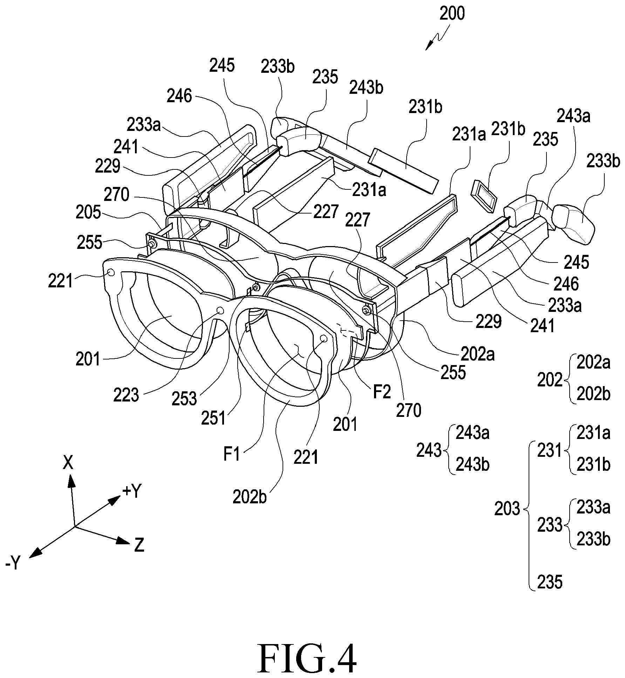

FIG. 3 is a perspective view illustrating an internal configuration of a wearable electronic device, according to an embodiment. FIG. 4 is an exploded perspective view illustrating a wearable electronic device, according to an embodiment.

Referring to FIGS. 3 and 4, a wearable electronic device 200 includes at least one circuit board 241 (e.g., a PCB, a printed board assembly (PBA), a flexible PCB, or a rigid-flexible PCB (RFPCB)) accommodated in the housing 210, at least one battery 243, at least one speaker module 245, at least one power transfer structure 246, and a camera module 250). The configuration of the housing 210 of FIG. 3 may be identical in whole or part to the configuration of the display members 201, the lens frame 202, the wearing members 203, and the hinge structures 229 of FIG. 2.

The wearable electronic device 200 may obtain and/or recognize a visual image regarding an object or environment in the direction (e.g., a -Y direction) in which the wearable electronic device 200 faces or the direction in which the user gazes, using the camera module 250, and may receive information regarding the object or environment from an external electronic device through a network. Additionally or alternatively, the wearable electronic device 200 may provide the received object-related information or environment-related information, in the form of an audio or visual form, to the user. The wearable electronic device 200 may provide the received object-related information or environment-related information, in a visual form, to the user through the display members 201, using the display module 160. For example, the wearable electronic device 200 may implement AR by implementing the object-related information or environment-related information in a visual form and combining it with an actual image of the user's surrounding environment.

The display member 201 may include a first surface F1 facing in a direction (e.g., a -y direction) in which external light is incident and a second surface F2 facing in a direction (e.g., a +y direction) opposite to the first surface F1. With the user wearing the wearable electronic device 200, at least a portion of the light or image coming through the first surface F1 may be incident on the user's left eye and/or right eye through the second surface F2 of the display member 201 disposed to face the user's left eye and/or right eye.

The lens frame 202 may include at least two or more frames. For example, the lens frame 202 may include a first frame 202a and a second frame 202b. When the user wears the wearable electronic device 200, the first frame 202a may be a frame of the portion facing the user's face, and the second frame 202b may be a portion of the lens frame 202 spaced from the first frame 202a in the gazing direction (e.g., -Y direction) in which the user gazes.

The light output module 211 may provide an image and/or video to the user. For example, the light output module 211 may include a display panel capable of outputting images and a lens corresponding to the user's eye and guiding images to the display member 201. The user may obtain the image output from the display panel of the light output module 211 through the lens of the light output module 211. The light output module 211 may include a device configured to display various information. The light output module 211 may include at least one of a liquid crystal display (LCD), a digital mirror device (DMD), a liquid crystal on silicon (LCoS), an organic light emitting diode (OLED), or a micro light emitting diode (micro LED). When the light output module 211 and/or the display member 201 includes one of an LCD, a DMD, or an LCoS, the wearable electronic device 200 may include a light output module 211 and/or a light source emitting light to the display area of the display member 201. When the light output module 211 and/or the display member 201 may include OLEDs or micro LEDs, the wearable electronic device 200 may provide virtual images to the user without a separate light source.

At least a portion of the light output module 211 may be disposed in the housing 210. For example, the light output module 211 may be disposed in the wearing member 203 or the lens frame 202 to correspond to each of the user's right eye and left eye. The light output module 211 may be connected to the display member 201 and may provide images to the user through the display member 201.

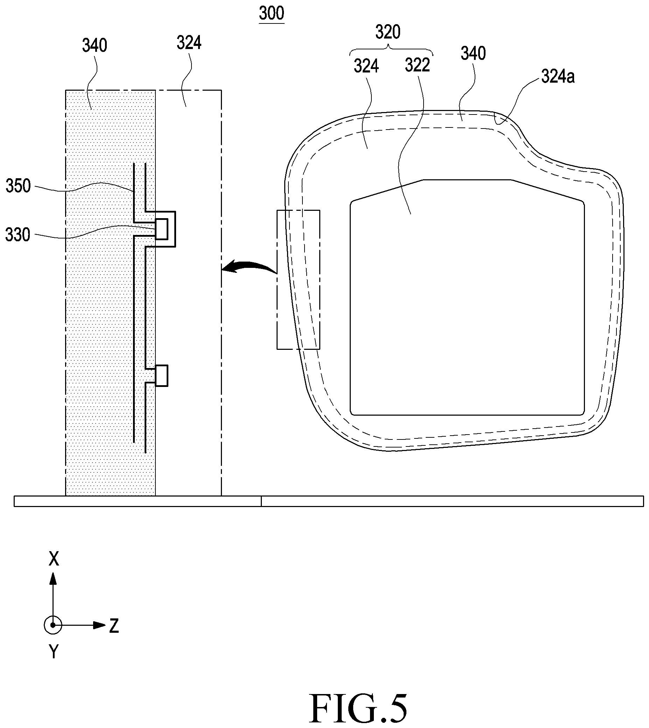

The circuit board 241 may include components for driving the wearable electronic device 200. For example, the circuit board 241 may include at least one integrated circuit (IC) chip. Further, at least one of the processor 120, the memory 130, the power management module 188, or the communication module 190 of FIG. 1 may be provided in the IC chip. A circuit board 241 may be disposed in the wearing member 203 of the housing 210. The circuit board 241 may be electrically connected to the battery 243 through the power transfer structure 246. The circuit board 241 may be connected to the flexible printed circuit board 205 and may transfer electrical signals to the electronic components (e.g., the light output module 211, the camera module 250, and the light emitting unit 330 of FIG. 5)) of the electronic device through the flexible printed circuit board 205. The circuit board 241 may be a circuit board including an interposer.

The flexible printed circuit board 205 may extend from the circuit board 241 through the hinge structure 229 to the inside of the lens frame 202 and may be disposed in at least a portion of the inside of the lens frame 202 around the display member 201.

The battery 243 may be connected with components (e.g., the light output module 211, the circuit board 241, and the speaker module 245, the microphone module 247, and the camera module 250) of the wearable electronic device 200 and may supply power to the components of the wearable electronic device 200.

At least a portion of the battery 243 may be disposed in the wearing member 203. Batteries 243 may be disposed in ends 203a and 203b of the wearing members 203. For example, the batteries 243 may include a first battery 243a disposed in a first end 203a of the wearing member 203 and a second battery 243b disposed in a second end 203b of the wearing member 203.

The speaker module 245 may convert an electrical signal into sound. At least a portion of the speaker module 245 may be disposed in the wearing member 203 of the housing 210. The speaker module 245 may be located in the wearing member 203 to correspond to the user's ear. The speaker module 245 may be disposed between the circuit board 241 and the battery 243.

The power transfer structure 246 may transfer the power from the battery 243 to the light output module 211 of the wearable electronic device 200. The power transfer structure 246 may be electrically connected to the battery 243 and/or the circuit board 241, and the circuit board 241 may transfer the received power to the light output module 211 through the power transfer structure 246. The power transfer structure 246 may be connected to the circuit board 241 through the speaker module 245. For example, when the wearable electronic device 200 is viewed from a side (e.g., in the Z-axis direction), the power transfer structure 246 may at least partially overlap the speaker module 245.

The power transfer structure 246 may be a component capable of transferring power and may include a flexible printed circuit board or wiring, and the wiring may include a plurality of cables. Various changes may be made to the shape of the power transfer structure 246 considering the number and/or type of the cables.

The microphone module 247 may convert a sound into an electrical signal. The microphone module 247 may be disposed in at least a portion of the lens frame 202. At least one microphone module 247 may be disposed on a lower end (e.g., in the -X-axis direction) and/or on an upper end (e.g., in the +X-axis direction) of the wearable electronic device 200. The wearable electronic device 200 may more clearly recognize the user's voice using voice information (e.g., sound) obtained by the at least one microphone module 247. The wearable electronic device 200 may distinguish the voice information from the ambient noise based on the obtained voice information and/or additional information (e.g., a low-frequency vibration of the user's skin and bones). For example, the wearable electronic device 200 may clearly recognize the user's voice and may perform a function of reducing ambient noise (e.g., a noise canceling function).

The camera module 250 may capture a still image and/or a video. The camera module 250 may include at least one of a lens, at least one image sensor, an ISP, or a flash. The camera module 250 may be disposed in the lens frame 202 and may be disposed around the display member 201.

The camera module 250 may include at least one first camera module 251. The first camera module 251 may capture the trajectory of the user's eye (e.g., a pupil) or gaze. For example, the first camera module 251 may capture the reflection pattern of the light emitted by the light emitting unit 330 to the user's eyes. The light emitting unit 330 may emit light in an infrared band for tracking the trajectory of the gaze using the first camera module 251, and may include an IR LED. The processor 120 may adjust the position of the virtual image so that the virtual image projected on the display member 201 corresponds to the direction in which the user's pupil gazes. The first camera module 251 may include a global shutter (GS)-type camera. It is possible to track the trajectory of the user's eyes or gaze using a plurality of third camera modules 251 having the same specifications and performance.

The first camera module 251 may periodically or aperiodically transmit information related to the trajectory of the user's eye or gaze (e.g., trajectory information) to the processor 120. When the first camera module 251 detects a change in the user's gaze based on the trajectory information (e.g., when the user's eyes move more than a reference value with the head positioned still), the first camera module 251 may transmit the trajectory information to the processor.

The camera modules 250 may include at least one second camera module 253 that may capture an external image. The second camera module 253 may be a global shutter-type or rolling shutter (RS)-type camera and may capture an external image through the second optical hole 223 formed in the second frame 202b. For example, the second camera module 253 may include a high-resolution color camera, and it may be a high resolution (HR) or photo video (PV) camera. Further, the second camera module 253 may provide an auto-focus (AF) function and an optical image stabilizer (OIS) function.

The wearable electronic device 200 may include a flash positioned adjacent to the second camera module 253. For example, the flash may provide light for increasing brightness (e.g., illuminance) around the wearable electronic device 200 when an external image is obtained by the second camera module 253, thereby reducing difficulty in obtaining an image due to the dark environment, the mixing of various light beams, and/or the reflection of light.

The camera modules 250 may include at least one third camera module 255. The third camera module 255 may capture the user's motion through a first optical hole 221 formed in the lens frame 202. The third camera module 255 may capture the user's gesture (e.g., a hand gesture). Third camera modules 255 and/or first optical holes 221 may be disposed on two opposite sides of the lens frame 202 (e.g., the second frame 202b), e.g., formed in two opposite ends of the lens frame 202 (e.g., the second frame 202b) with respect to the X direction. The third camera module 255 may be a GS-type camera. For example, the third camera module 255 may be a camera supporting three degrees of freedom (3DoF) or six degrees of freedom (6DoF), which may provide position recognition and/or motion recognition in a 360-degree space (e.g., omni-directionally). The third camera modules 255 may be stereo cameras and may perform the functions of simultaneous localization and mapping (SLAM) and user motion recognition using a plurality of global shutter-type cameras with the same specifications and performance. The third camera module 255 may include an IR camera (e.g., a time of flight (TOF) camera or a structured light camera). The IR camera may be operated as at least a portion of a sensor module 176 for detecting a distance from the subject.

At least one of the first camera module 251 or the third camera module 255 may be replaced with a sensor module 176, and may include at least one of a vertical cavity surface emitting laser (VCSEL), an IR sensor, and/or a photodiode. The photodiode may include a positive intrinsic negative (PIN) photodiode or an avalanche photodiode (APD). The photodiode may be referred to as a photo detector or a photo sensor.

At least one of the first camera module 251, the second camera module 253, and the third camera module 255 may include a plurality of camera modules. The second camera module 253 may include a plurality of lenses (e.g., wide-angle and telephoto lenses) and image sensors. The second camera module 253 may be disposed on one surface (e.g., a surface facing in the -Y axis) of the wearable electronic device 200. The wearable electronic device 200 may include a plurality of camera modules having different properties (e.g., angle of view properties) or functions and control to change the angle of view of the camera module based on the user's selection and/or trajectory information. At least one of the plurality of camera modules may be a wide-angle camera and at least another of the plurality of camera modules may form a telephoto camera.

The processor 120 may determine the motion of the wearable electronic device 200 and/or the user's motion using information for the wearable electronic device 200 obtained using at least one of a gesture sensor, a gyro sensor, or an acceleration sensor of the sensor module 176 and the user's action (e.g., approach of the user's body to the wearable electronic device 200) obtained using the first camera module 251. In addition to the above-described sensor, the wearable electronic device 200 may include a magnetic (e.g., a geomagnetic) sensor capable of measuring an orientation using a magnetic field and magnetic force lines and/or a hall sensor capable of obtaining motion information (e.g., a moving direction or distance) using the strength of a magnetic field. The processor may determine the motion of the wearable electronic device 200 and/or the user's motion based on information obtained from the magnetic (e.g., geomagnetic) sensor and/or the hall sensor.

The wearable electronic device 200 may perform an input function (e.g., a touch and/or pressure sensing function) capable of interacting with the user. A component configured to perform a touch and/or pressure sensing function (e.g., a touch sensor and/or a pressure sensor) may be disposed in at least a portion of the wearing member 203. The wearable electronic device 200 may control the virtual image output through the display member 201 based on the information obtained through the components. A sensor associated with a touch and/or pressure sensing function may be configured in various as a resistive type sensor, a capacitive type sensor, an electro-magnetic (EM) type sensor, or an optical type sensor. The component configured to perform the touch and/or pressure sensing function may be identical in whole or part to the configuration of the input module 150 of FIG. 1.

The wearable electronic device 200 may including a reinforcing member 260 that is disposed in an inner space of the lens frame 202 and formed to have a higher rigidity than that of the lens frame 202.

The wearable electronic device 200 may include a lens structure 270 that may refract at least a portion of light. For example, the lens structure 270 may be a prescription lens having a predesignated refractive power. The lens structure 270 may be disposed behind (e.g., in the +Y direction) the second window member 430 of the display member 201. The lens structure 270 may be positioned between the display member 201 and the user's eye and may face one surface (e.g., the second outer surface 430b) of the display member 400.

The housing 210 may include a hinge cover 227 that may conceal a portion of the hinge structure 229. Another part of the hinge structure 229 may be accommodated or hidden between an inner case 231 and an outer case 233, which are described below.

The wearing member 203 may include the inner case 231 and the outer case 233. The inner case 231 may be, e.g., a case configured to face the user's body or directly contact the user's body, and may be formed of a material having low thermal conductivity, e.g., a synthetic resin. The inner case 231 may include an inner side surface 231c facing the user's body. The outer case 233 may include a material (e.g., a metal) capable of at least partially transferring heat and may be coupled to the inner case 231 to face each other. The outer case 233 may include an outer side surface 231d opposite to the inner side surface 331c. At least one of the circuit board 241 or the speaker module 245 may be accommodated in a space separated from the battery 243 in the wearing member 203. The inner case 231 may include a first case 231a including the circuit board 241 or the speaker module 245 and a second case 231b accommodating the battery 243, and the outer case 233 may include a third case 233 a coupled to face the first case 231a and a fourth case 233b coupled to face the second case 231b. The first case 231a and the third case 233a may be coupled (hereinafter, "first case portions 231a and 233 a") to accommodate the circuit board 241 and/or the speaker module 245, and the second case 231b and the fourth case 233b may be coupled (hereinafter, "second case portions 231b and 233b") to accommodate the battery 343.

The first case portions 231a and 233a may be rotatably coupled to the lens frame 202 through the hinge structure 229, and the second case portions 231b and 233b may be connected or mounted to the ends of the first case portions 231a and 233a through the connecting member 235. A portion of the connecting member 235 in contact with the user's body may be formed of a material having low thermal conductivity, e.g., an elastic material, such as silicone, polyurethane, or rubber, and another portion thereof which does not come into contact with the user's body may be formed of a material having high thermal conductivity (e.g., a metal). When heat is generated from the circuit board 241 or the battery 243, the connecting member 235 may block heat transfer to the portion in contact with the user's body while dissipating or discharging heat through the portion not in contact with the user's body. A portion of the connecting member 235 configured to come into contact with the user's body may be interpreted as a portion of the inner case 231, and a portion of the connecting member 235 that does not come into contact with the user's body may be interpreted as a portion of the outer case 233. The first case 231a and the second case 231b may be integrally configured without the connecting member 235, and the third case 233a and the fourth case 233b may be integrally configured without the connecting member 235. In addition, other components (e.g., the antenna module 197) may be included. The communication module 190 may be used to receive information about an environment from an external electronic device via a network.

FIG. 5 is a front view illustrating an electronic device including a light emitting unit disposed on a display member, according to an embodiment.

Referring to FIG. 5, an electronic device 300 includes a display member 320, a light emitting unit 330, an electrode film 340, and a wiring structure 350. The configurations of the electronic device 300 and the display member 320 of FIG. 5 may be identical in whole or part to the configurations of the wearable electronic device 200 and the display member 201 of FIGS. 2-4.

The display member 320 may include an optical element 410 including a display area 322 and a dummy area 324. The display member 320 may be formed to be substantially transparent, and the user may perceive the external image through the display member 320. At least a portion of the display area 322 and at least a portion of the dummy area 324 may be substantially transparent.

The display area 322 may transfer light emitted from a light output module 211 to the user. The display area 322 may be defined with a portion of a waveguide 412 including a light splitter for refracting the light emitted from the light output module 211 and portions of a first window member 420 and a second window member 430 overlapping a portion of the waveguide 412 where the light splitter is positioned. The user may view the image provided from the light output module 211 through the display area 322 while recognizing an external image through the display member 320.

The dummy area 324 may surround the display area 322 and may form at least a portion of the edge 324a or periphery of the display member 320. The dummy area 324 may be an area that does not transfer the light emitted from the light output module 211 of the display member 320 to the user. A portion (e.g., the edge 324a) or the periphery of the dummy area 324 may face the lens frame 202. A portion (e.g., the edge 324a) of the dummy area 324 may overlap the lens frame 202 in the first direction (e.g., the Y-axis direction) and/or the second direction (e.g., the XZ plane direction) and may not be visually exposed.

The light emitting unit 330 may emit light in an IR band or a visible light band. The light emitting unit 330 may include a light emitting diode (LED). The light emitting unit 330 may provide a light source that interacts with the operation of the first camera module 251. For example, the light emitting unit 330 may include a light source (e.g., an LED, an IR LED and/or a xenon lamp) for implementing glint-type eye tracking.

The light emitting unit 330 may be disposed in the display member 320. The light emitting unit 330 may be disposed in the dummy area 324 of the display member 320 and may be positioned adjacent to an edge 324a or periphery of the display member 320.

The electronic device 300 may include a plurality of light emitting units 330 arranged along the edge 324a of the display member 320. Various changes may be made to the number and arrangement for the light emitting units 330 based on the intensity of light emitted from the light emitting units 330 and the performance of the first camera module 251.

The electrode film 340 may be electrically connected with the light emitting unit 330. For example, the light emitting unit 330 may be electrically connected with at least one of a circuit board 241 or a battery 243 through the electrode film 340.

The electrode film 340 may be disposed in the display member 320. For example, the electrode film 340 may be disposed in the dummy area 324 of the display member 320. Additionally or alternatively, the electrode film 340 may be disposed along the edge 324a of the display member 320. At least a portion of the electrode film 340 may overlap the lens frame 202 and may not be visually exposed.

The electrode film 340 may be formed to be substantially transparent. For example, the electrode film 340 may have a visible light transmittance of 80% or more with respect to a visible light band (e.g., 550 nanometers (nm)) of light. The electrode film 340 may include at least one of indium tin oxide (ITO), graphene, a conductive polymer (e.g., Pedot:pss), carbon nanotubes, or silver nanowires.

The electronic device 300 may include a wiring structure 350. The wiring structure 350 may be disposed on the electrode film 340 and may be electrically connected to the light emitting unit 330. The electrode film 340 may be a substantially transparent substrate, and the light emitting unit 330 may be electrically connected with at least one of the circuit board 241 or the battery 243 through the wiring structure 350. The wiring structure 350 may be disposed along the edge 324a of the display member 320. At least a portion of the wiring structure 350 may be formed in a closed loop shape surrounding the edge 324a of the display member 320. At least a portion of the wiring structure 350 may overlap at least a portion of the lens frame 202. The wiring structure 350 may include at least one of copper (Cu), nickel (Ni), or gold (Au). The wiring structure 350 or the electrode film 340 may be electrically connected with a flexible PCB 205. The edge 324a may be an edge of the display member 320 and may be an edge of the optical element 410, the first window, and/or the second window.

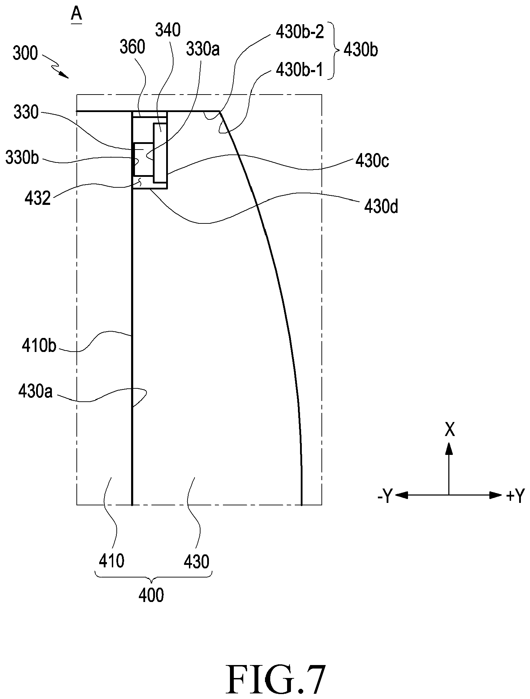

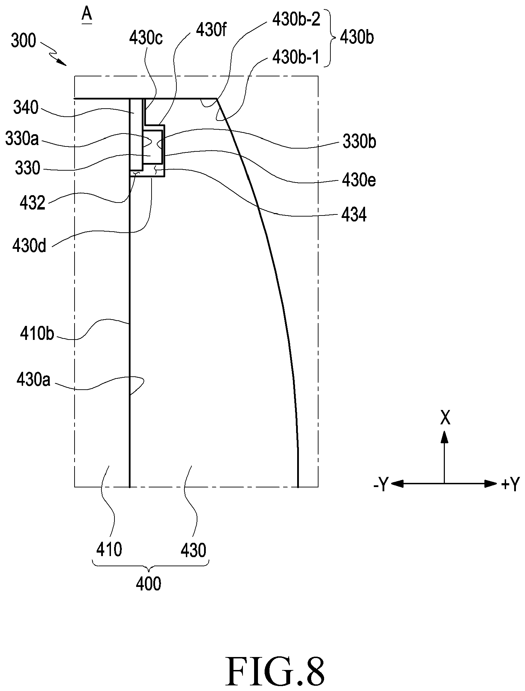

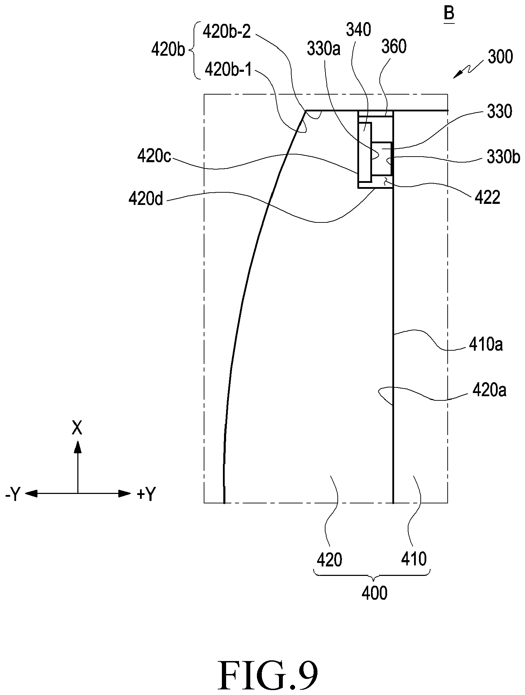

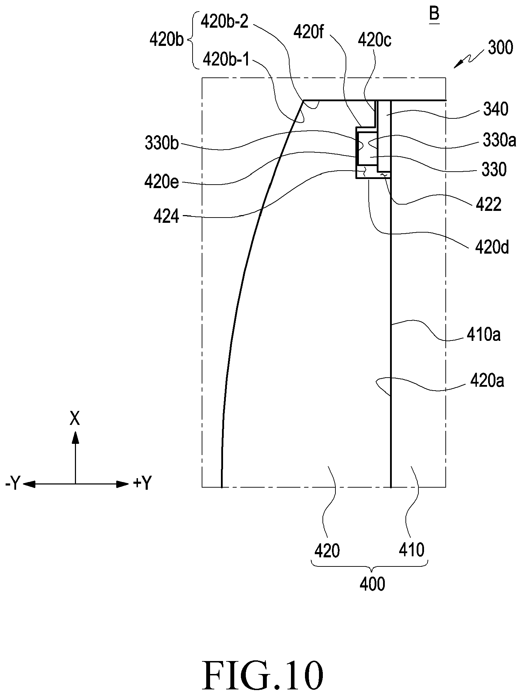

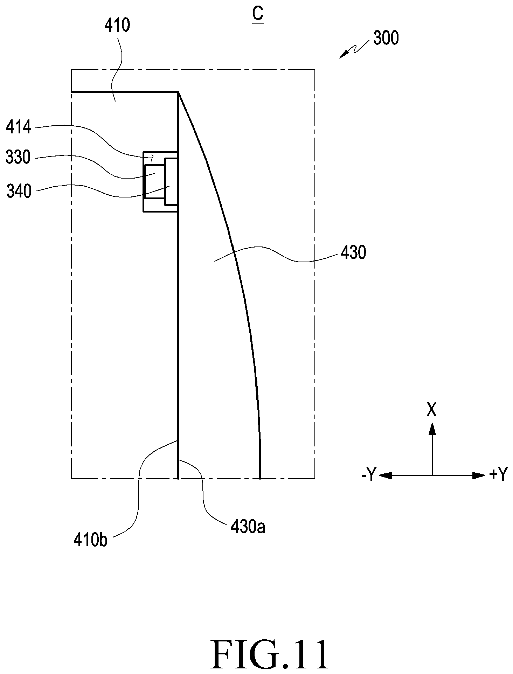

FIG. 6 is a side view illustrating a display member, according to an embodiment. FIG. 7 is an enlarged view of area A of FIG. 6, according to an embodiment. FIG. 8 is an enlarged view of area A of FIG. 6 according to an embodiment. FIG. 9 is an enlarged view of area B of FIG. 6, according to an embodiment. FIG. 10 is an enlarged view of area B of FIG. 6, according to an embodiment. FIG. 11 is an enlarged view of area C of FIG. 6, according to an embodiment.

Referring to FIGS. 6-11, an electronic device 300 includes a display member 400, a light emitting unit 330, and an electrode film 340. The configuration of the display member 400 of FIGS. 6-11 may be identical in whole or part to the configuration of the display member 320 of FIG. 5. The configurations of the electronic device 300, the light emitting unit 330, and the electrode film 340 of FIGS. 7-11 may be identical in whole or part to the configurations of the electronic device 300, the light emitting unit 330, and the electrode film 340 of FIG. 5.

The display member 400 may include an optical element (or optical member) 410 including a waveguide 412. The optical element 410 may guide the light emitted from the light output module 211. The waveguide 412 may include at least one first light splitter for changing the propagation direction of light and may transfer the light emitted from the light output module 211 to the user. The waveguide 412 may transfer the image of the user's eye to the first camera module 251. The waveguide 412 may include at least one second light splitter for changing the propagation direction of light. The light reflected from the user's eye may be transferred to the first camera module 251 through the waveguide 412 of the display member 400. The waveguide 412 may be formed of glass, plastic, or polymer. The waveguide 412 may include a nano pattern formed on one surface of the inside or outside, e.g., a grating structure having a polygonal or curved shape. Light incident to one end of the waveguide 412 through an input optical member may be propagated inside the waveguide 412 by the nano pattern and provided to the user. The waveguide 412 formed of a free-form prism may provide incident light to the user through a reflective mirror. The waveguide 412 may include at least one diffractive element, e.g., at least one of a diffractive optical element (DOE), a holographic optical element (HOE), or a reflective element (e.g., a reflective mirror). The waveguide 412 may guide the light emitted from the light output module 211 to the user's eye using at least one diffractive or reflective element. The diffractive element may include an input optical member or an output optical member. The input optical member may mean an input grating area, and the output optical member may mean an output grating area. The input grating area may serve as an input terminal for diffracting (or reflecting) light output from the light output module 211 to the waveguide 412. The output grating area may serve as an exit for diffracting (or reflecting) the light transferred to the waveguide 412 to the user's eye. The optical element 410 may include a display area 322 and a dummy area 324. The waveguide 412 may be positioned in the optical element 410 to correspond to the display area 322 and may be disposed in the display area 322.

The optical element 410 may include a first surface 410a and a second surface 410b opposite to the first surface 410a. The first surface 410 may be a front surface facing forward of the display member 400 (e.g., -Y direction), and the second surface 410b may be a rear surface facing rearward of the display member 400 (e.g., +Y direction). The first surface 410a and the second surface 410b may be substantially parallel.

The display member 400 may include a first window member 420. The first window member 420 may protect the optical element 410 from external impact and may be disposed in front of the optical element 410 (e.g., in the -Y direction).

The first window member 420 may refract at least a portion of light passing through the display member 400. The first window member 420 may include a first inner surface 420a facing the first surface 410a of the optical element 410 and a first outer surface 420b opposite to the first inner surface 420a. The first outer surface 420b may have a partially curved shape. The first outer surface 420b of the first window member 420 may be convex. The first outer surface 420b of the first window member 420 may be concave.

The display member 400 may include a second window member 430. The second window member 430 may protect the optical element 410 from external impact. For example, the second window member 430 may be disposed behind the optical element 410 (e.g., in the +Y direction).

The second window member 430 may refract at least a portion of light passing through the display member 400 and may include a second inner surface 430a facing the second surface 410b of the optical element 410 and a second outer surface 430b opposite to the second inner surface 430a. The second outer surface 430b may have a curved shape.

Referring to FIG. 6, the second outer surface 430b of the second window member 430 is convex. Alternatively, the second outer surface 430b of the second window member 430 may be concave.

Referring to FIG. 7 or FIG. 8, the light emitting unit 330 is disposed between the optical element 410 and the second window member 430. For example, the light emitting unit 330 may be disposed in an edge 324a of the display member 320 of the second window member 430 and the dummy area 324 of the optical element 410.

Referring to FIG. 7, the light emitting unit 330 is disposed in a first recess 432 of the second window member 430. Referring to FIG. 8, at least a portion of the light emitting unit 330 is disposed in a second recess 434 of the second window member 430. The first recess 432 may be positioned in the dummy area 324. The first recess 432 may be interpreted as a component facing the dummy area 324. For example, when the display member 320 is viewed from thereabove (e.g., in the Y-axis direction), the light emitting unit 330 may overlap the dummy area 324, and when the display member 320 is viewed from the side (e.g., in the Z-axis direction), the light emitting unit 330 positioned in the first recess 432 may be seen.

Referring again to FIG. 7, the second window member 430 includes the first recess 432. The first recess 432 may accommodate at least a portion of the electrode film 340 or at least a portion of the light emitting unit 330. The first recess 432 may be formed in at least a portion of the edge of the second window member 430 to surround the edge of the second window member 430.

The second window member 430 may include a third surface 430c, which extends from at least a portion of the second outer surface 430b (e.g., a second portion of the second outer surface 430b-2) and faces at least one of the electrode film 340 or the light emitting unit 330, and a fourth surface 430d, which extends from the third surface 430c and connects to the second inner surface 430a. At least a portion of the first recess 432 may be surrounded by the third surface 430c, the fourth surface 430d, and the second surface 410b.

Referring to FIG. 7, the second outer surface 430b includes a first portion of the second outer surface 430b-1 forming at least a portion of the exterior of the display member 400 and a second portion of the second outer surface 430b-2 extending from the first portion of the second outer surface 430b-1 and connected to the third surface 430c. The second outer surface 430b may be an integral curved surface.

Referring to FIG. 8, the second window member 430 includes the second recess 434. The second recess 434 may accommodate at least a portion of the light emitting unit 330 and may be a recess extending from the first recess 432 rearward of the display member 400 (e.g., +Y direction). The first recess 432 and the second recess 434 may be an integral empty space. For example, each of the first recess 432 and the second recess 434 may be interpreted as a separate area of one recess.

The second window member 430 may include a fifth surface 430e, which extends from the fourth surface 430d and faces at least one of the second surface 410b of the optical element 410, the electrode film 340, or the light emitting unit 330, and a sixth surface 430f, which extends from the third surface 430c and faces the light emitting unit 330. At least a portion of the second recess 434 may be surrounded by the fourth surface 430d, the fifth surface 430e, and the sixth surface 430f.

Referring to FIG. 8, the second outer surface 430b includes a first portion of a second outer surface 430b-1 forming at least a portion of the exterior of the display member 400 and a second portion of the second outer surface 430b-2 extending from the first portion of the second outer surface 430b-1 and connected to the third surface 430c. The second outer surface 430b may be an integral curved surface.

Referring to FIG. 9 or FIG. 10, the light emitting unit 330 is disposed between the first window member 420 and the optical element 410. For example, the light emitting unit 330 may be disposed between an edge 324a of the display member 320 of the first window member 420 and the dummy area 324 of the optical element 410.

Referring to FIG. 9, the light emitting unit 330 is disposed in a third recess 422 of the first window member 420. Referring to FIG. 10, at least a portion of the light emitting unit 330 may be disposed in a fourth recess 424 of the first window member 420.

The first window member 420 may include the third recess 422 and accommodate at least a portion of the electrode film 340 or at least a portion of the light emitting unit 330. The third recess 422 may be formed in at least a portion of the edge 324a of the first window member 420 and to surround the edge of the first window member 420.

The configuration of the first window member 420 or the third recess 422 may be identical in whole or part to the configuration of the second window member 430 or the first recess 432. For example, the first window member 420 may include a seventh surface 420c, which extends from at least a portion (e.g., the second portion of the first outer surface 420b-2) of the first outer surface 420b and faces at least one of the electrode film 340 or the light emitting unit 330, and an eighth surface 420d, which extends from the seventh surface 420c and connects to the first inner surface 420a. At least a portion of the third recess 422 may be surrounded by the seventh surface 420c, the eighth surface 420d, and the first surface 410a.

Referring to FIG. 9 or FIG. 10, the first outer surface 420b includes a first portion of the first outer surface 420b-1 forming at least a portion of the exterior of the display member 400 and a second portion of the first outer surface 420b-2 extending from the first portion of the first outer surface 420b-1 and connected with the seventh surface 420c. The first outer surface 420b may be an integral curved surface.

Referring to FIG. 8, the first window member 420 includes a fourth recess 424. The fourth recess 424 may accommodate at least a portion of the light emitting unit 330 and may be a recess extending from the third recess 422 rearward of the display member 400 (e.g., +Y direction). The third recess 422 and the fourth recess 424 may be an integral empty space. For example, each of the third recess 422 and the fourth recess 424 may be interpreted as a separate area of one recess.

Referring to FIG. 10, the second window member 430 includes a ninth surface 420e, which extends from the eighth surface 420d and faces at least one of the second surface 410b of the optical element 410, the electrode film 340, or the light emitting unit 330, and a tenth surface 420f, which extends from the seventh surface 420c and faces the light emitting unit 330. At least a portion of the second recess 434 may be surrounded by the eighth surface 420d, the ninth surface 420e, and the tenth surface 420f.

Referring to FIG. 11, the light emitting unit 330 is disposed in the optical element 410. The optical element 410 may include a fifth recess 414 formed in the dummy area 324. The light emitting unit 330 may be disposed in the fifth recess 414. The electrode film 340 may be disposed on the second inner surface 430a of the second window member 430 facing the fifth recess 414, and the light emitting unit 330 may be connected with the electrode film 340. The fifth recess 414 formed in the dummy area 324 of the optical element 410 may face the first window member 420. The electrode film 340 may be disposed on the first inner surface 420a of the first window member 420 facing the fifth recess 414, and the light emitting unit 330 may be connected with the electrode film 340.

The light emitting unit 330 may have a flip chip structure. For example, the light emitting unit 330 may include a first light emitting unit surface 330a facing the electrode film 340 and a second light emitting unit surface 330b opposite to the first light emitting unit surface 330a. Light may be emitted from the first light emitting unit surface 330a and the second light emitting unit surface 330b. The light emitted from the light emitting unit 330 may be transferred to the user through at least one of the electrode film 340 or the second window member 430.

The electrode film 340 may be disposed in the display member 400. For example, the electrode film 340 may be disposed in the first recess 432 formed in the second window member 430.

Referring to FIG. 7, the electrode film 340 is disposed between the light emitting unit 330 and the second window member 430. For example, the electrode film 340 may be disposed between the third surface 430c of the second window member 430 and the second surface 410b of the optical element 410, and the light emitted from the light emitting unit 330 may be transferred to the user through the electrode film 340 and the second window member 430.

Referring to FIG. 8, at least a portion of the electrode film 340 is disposed between the optical element 410 and the light emitting unit 330. For example, at least a portion of the electrode film 340 may be disposed on the third surface 430c of the second window member 430 or on the second surface 410b of the optical element 410.

The electronic device 300 may include a sealing member 360. The sealing member 360 may surround the light emitting unit 330 and may reduce the inflow of foreign substances into the display member 400 or the first recess 432. The sealing member 360 may have a closed loop shape.

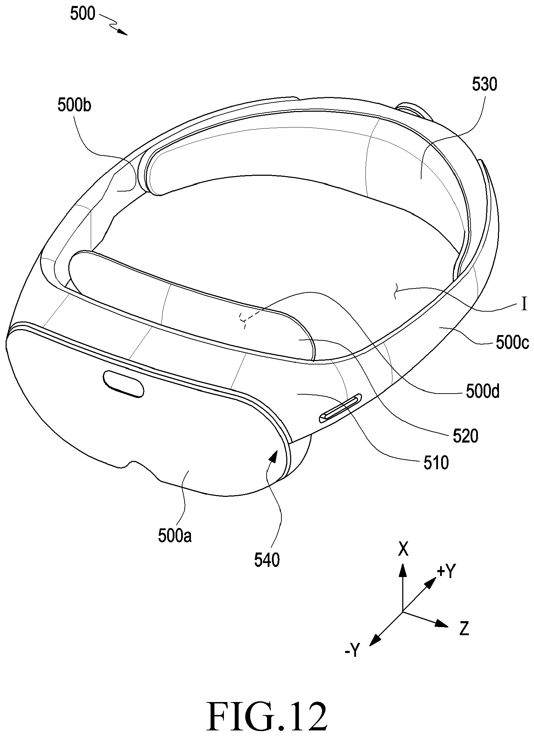

FIG. 12 is a perspective view illustrating a wearable electronic device, according to an embodiment.

Referring to FIG. 12, an electronic device 500 is an HMD capable of providing an image in front of the user's eyes. The configuration of the electronic device 500 of FIG. 12 may be identical in whole or part to the configuration of the wearable electronic device 200 of FIG. 2.

The electronic device 500 may form the exterior of the electronic device 500 and may include a first housing 510, a second housing 520, and a third housing 530 that may provide a space in which components of the electronic device 500 may be disposed.

The electronic device 500 may include a first housing 510 that may surround at least a portion of the user's head. The first housing 510 may include a first surface 500a facing the outside (e.g., -Y direction) of the electronic device 500.

The first housing 510 may surround at least a portion of the inner space I. The first housing 510 may include a second surface 500b facing the inner space I of the electronic device 500 and a third surface 500c opposite to the second surface 500b. The first housing 510 may be coupled with the third housing 530 and may be formed in a closed loop shape surrounding the inner space I.

The first housing 510 may surround at least some of the components of the electronic device 500. The light output module 211, the circuit board 241, and the speaker module 245 may be disposed in the first housing 510.

The electronic device 500 may include one display member 540 corresponding to the left eye and the right eye. The display member 540 may be disposed in the first housing 510. The configuration of the display member 540 of FIG. 12 may be identical in whole or part to the configuration of the display member 201 of FIG. 2.

The electronic device 500 may include a second housing 520 that may be seated on the user's face. The second housing 520 may include a fourth surface 500d that may at least partially face the user's face. The fourth surface 500d may be a surface in a direction (e.g., +Y direction) toward the internal space I of the electronic device 500.

The electronic device 500 may include a third housing 530 that may be seated on the back of the user's head. The third housing 530 may be coupled with the first housing 510 and may surround at least some of the components of the electronic device 500. For example, a battery 243 may be disposed in the third housing 530.

According to various embodiments of the disclosure, a wearable electronic device (e.g., the wearable electronic device 200 of FIG. 2) may comprise a housing (e.g., the housing 210 of FIG. 2), a light output module (e.g., the light output module 211 of FIG. 3) disposed in the housing and configured to output an image, at least one display member (e.g., the display member 201 of FIG. 3) disposed in the housing, the at least one display member including an optical element (e.g., the optical element 410 of FIG. 6) including a waveguide (e.g., the waveguide 412 of FIG. 6) configured to guide light generated from the light output module and including a first surface (e.g., the first surface 410a of FIG. 6) and a second surface (e.g., the second surface 410b of FIG. 6) opposite to the first surface, a first window member (e.g., the first window member 420 of FIG. 6) disposed on the first surface, and a second window member (e.g., the second window member 430 of FIG. 6) disposed on the second surface and including a first recess (e.g., the first recess 432 of FIG. 7) facing the second surface, and at least one light emitting unit (e.g., the light emitting unit 330 of FIG. 5) disposed in the first recess.

According to various embodiments, the optical element may include a display area (e.g., the display area 322 of FIG. 5), in which the waveguide is disposed, and a dummy area (e.g., the dummy area 324 of FIG. 5) surrounding the display area. The at least one light emitting unit may be disposed in the dummy area.

According to various embodiments, the electronic device may further comprise a transparent electrode film (e.g., the electrode film 340 of FIG. 7) disposed in the first recess and connected with the at least one light emitting unit.

According to various embodiments, the at least one light emitting unit may be disposed between the electrode film and the optical element.

According to various embodiments, the second window member may include a second recess (e.g., the second recess 434 of FIG. 8) extending from the first recess and accommodating the at least one light emitting unit. At least a portion of the electrode film may be disposed between the at least one light emitting unit and the optical element.

According to various embodiments, the at least one light emitting unit includes a first light emitting unit surface (e.g., the first light emitting unit surface 330a of FIG. 7) facing the electrode film and a second light emitting unit surface (e.g., the second light emitting unit surface 330b of FIG. 7) opposite to the first light emitting unit surface. The at least one light emitting unit may have a flip chip structure emitting light from the first light emitting unit surface and the second light emitting unit surface.

According to various embodiments, the first window member may include a first inner surface (e.g., the first inner surface 420a of FIG. 6) facing the first surface and a curved first outer surface (e.g., the first outer surface 420b of FIG. 6) opposite to the first inner surface, and the second window member may include a second inner surface (e.g., the second inner surface 430a of FIG. 6) facing the second surface and a curved second outer surface (e.g., the second outer surface 430b of FIG. 6) opposite to the second inner surface.

According to various embodiments, the wearable electronic device may further comprise a lens structure (e.g., the lens structure 270 of FIG. 3) configured to refract at least a portion of light and facing the second outer surface. According to various embodiments, the housing may include a lens frame (e.g., the lens frame 202 of FIG. 2) accommodating the display member and a wearing member (e.g., the wearing member 203 of FIG. 2) extending from the lens frame and accommodating a circuit board (e.g., the circuit board 241 of FIG. 3) on which a processor (e.g., the processor 120 of FIG. 1) is mounted.

According to various embodiments, the wearable electronic device may further comprise a wiring structure (e.g., the wiring structure 350 of FIG. 5) connecting the circuit board and the at least one light emitting unit. The lens frame may overlap at least a portion of the wiring structure.

According to various embodiments, the wearable electronic device may further comprise at least one first camera module (e.g., the first camera module 251 of FIG. 4) configured to detect a trajectory of a user's gaze based on light emitted from the at least one light emitting unit.

According to various embodiments, the wearable electronic device may further comprise a sealing member (e.g., the sealing member 360 of FIG. 7) surrounding at least a portion of the at least one light emitting unit.

According to various embodiments, the at least one light emitting unit may include a light emitting diode configured to an infrared band of light.

According to various embodiments, the wearable electronic device may further comprise a second camera module (e.g., the second camera module 253 of FIG. 3) configured to capture an external image, and at least one third camera module (e.g., the third camera module 255) configured to capture a user's motion.

According to various embodiments, the housing may include a first housing (e.g., the first housing 510 of FIG. 12) formed to surround at least a portion of a user's head, a second housing (e.g., the second housing 520 of FIG. 12) coupled to the first housing and configured to rest on the user's face, and a third housing (e.g., the third housing 530 of FIG. 12) coupled to the first housing and configured to rest on a back of the user's head.

According to various embodiments of the disclosure, a wearable electronic device (e.g., the wearable electronic device 200 of FIG. 2) may comprise a lens frame (e.g., the lens frame 202 of FIG. 2), a wearing member (e.g., the wearing member 203 of FIG. 2) coupled to at least a side of the lens frame, an light output module (e.g., the light output module 211 of FIG. 3) configured to output an image, at least one display member (e.g., the display member 400 of FIG. 6) disposed in the lens frame and including an optical element (e.g., the optical element 410 of FIG. 6) including a display area (e.g., the display area 322 of FIG. 5) configured to display light generated from the light output module and a dummy area (e.g., the dummy area 324 of FIG. 5) surrounding the display area and facing the lens frame, a first window member (e.g., the first window member 420 of FIG. 6) disposed on a first surface (e.g., the first surface 410a of FIG. 6) of the optical element, and a second window member (e.g., the second window member 430 of FIG. 6) disposed on a second surface (e.g., the second surface 410b of FIG. 6) of the optical element, opposite to the first surface, and at least one light emitting unit (e.g., the light emitting unit 330 of FIG. 5) disposed between the dummy area and the second window member, between the dummy area and the first window member, or in the dummy area.

According to various embodiments, the second window member may include a first recess (e.g., the first recess 432 of FIG. 7) facing the dummy area. The electronic device may further comprise a transparent electrode film (e.g., the electrode film 340 of FIG. 7) disposed in the first recess and connected with the at least one light emitting unit.

According to various embodiments, the at least one light emitting unit may be disposed between the electrode film and the waveguide.

According to various embodiments, the second window member may include a second recess (e.g., the second recess 434 of FIG. 8) extending from the first recess and accommodating the at least one light emitting unit. At least a portion of the electrode film may be disposed between the waveguide and the at least one light emitting unit.

According to various embodiments, the wearable electronic device may further comprise at least one first camera module (e.g., the first camera module 251 of FIG. 3) configured to detect a trajectory of a user's gaze.

While the present disclosure has been particularly shown and described with reference to certain embodiments thereof, it will be understood by those of ordinary skill in the art that various changes in form and details may be made therein without departing from the spirit and scope of the disclosure as defined by the appended claims and their equivalents.

## Claims

1. A wearable electronic device, comprising:
a housing;
a light output module disposed in the housing and configured to output an image;
at least one display member disposed in the housing, the at least one display member including an optical element including a waveguide configured to guide light generated from the light output module and including a first surface and a second surface opposite to the first surface, a first window member disposed on the first surface, and a second window member disposed on the second surface and including a first recess facing the second surface; and
at least one light emitting unit disposed in the first recess.

2. The wearable electronic device of claim 1, wherein the optical element includes a display area, in which the waveguide is disposed, and a dummy area surrounding the display area, and
wherein the at least one light emitting unit is disposed in the dummy area.

3. The wearable electronic device of claim 1, further comprising a transparent electrode film disposed in the first recess and connected with the at least one light emitting unit.

4. The wearable electronic device of claim 3, wherein the at least one light emitting unit is disposed between the electrode film and the optical element.

5. The wearable electronic device of claim 3, wherein the second window member includes a second recess extending from the first recess and accommodating the at least one light emitting unit, and
wherein at least a portion of the electrode film is disposed between the at least one light emitting unit and the optical element.

6. The wearable electronic device of claim 3, wherein the at least one light emitting unit includes a first light emitting unit surface facing the electrode film and a second light emitting unit surface opposite to the first light emitting unit surface, and
wherein the at least one light emitting unit has a flip chip structure emitting light from the first light emitting unit surface and the second light emitting unit surface.

7. The wearable electronic device of claim 1, wherein the first window member includes a first inner surface facing the first surface and a curved first outer surface opposite to the first inner surface, and
wherein the second window member includes a second inner surface facing the second surface and a curved second outer surface opposite to the second inner surface.

8. The wearable electronic device of claim 7, further comprising a lens structure configured to refract at least a portion of light and facing the second outer surface.

9. The wearable electronic device of claim 1, wherein the housing includes a lens frame accommodating the display member and a wearing member extending from the lens frame and accommodating a circuit board on which a processor is mounted.

10. The wearable electronic device of claim 9, further comprising a wiring structure connecting the circuit board and the at least one light emitting unit, wherein the lens frame overlaps at least a portion of the wiring structure.

11. The wearable electronic device of claim 1, further comprising at least one first camera module configured to detect a trajectory of a user's gaze based on light emitted from the at least one light emitting unit.

12. The wearable electronic device of claim 1, further comprising a sealing member surrounding at least a portion of the at least one light emitting unit.

13. The wearable electronic device of claim 1, wherein the at least one light emitting unit includes a light emitting diode configured to emit an infrared band of light.

14. The wearable electronic device of claim 1, further comprising:
a second camera module configured to capture an external image; and
at least one third camera module configured to capture a user's motion.

15. The wearable electronic device of claim 1, wherein the housing includes:
a first housing formed to surround at least a portion of a user's head;
a second housing coupled to the first housing and configured to rest on the user's face; and
a third housing coupled to the first housing and configured to rest on a back of the user's head.
